# EUROPEAN PATENT SPECIFICATION

(11) **EP 3 579 642 B1**
(45) Date of publication and mention of the grant of the patent: **30.08.2023**
(21) Application number: 18748677.4
(22) Date of filing: 05.02.2018
(51) Int. Cl.: H04W 76/14, H04W 88/04, H04W 28/02, H04W 92/18

(54) **COMMUNICATION METHODS FOR DEVICE-TO-DEVICE SYSTEM**
KOMMUNIKATIONSVERFAHREN FÜR EIN D2D-SYSTEM
PROCÉDÉS DE COMMUNICATION POUR SYSTÈME DE DISPOSITIF À DISPOSITIF

(30) Priority: 03.02.2017 CN 201710063491
(43) Date of publication of application: 11.12.2019
(60) Divisional application: 23186746.6
(73) Proprietor: ZTE Corporation, Shenzhen, Guangdong 518057 (CN)
(72) Inventor: CHEN, Yuqin, Shenzhen Guangdong 518057 (CN)
(74) Representative: Iannone, Carlo Luigi
(86) International application number: PCT/CN2018/075326
(87) International publication number: WO 2018/141294

(56) References cited:
- WO-A1-2016/163430
- WO-A1-2017/014716
- CN-A- 104 427 572
- HUAWEI HISILICON: "Summary of email discussion [95bis#15][LTE/FeD2D] Bearer modelling and adaptation layer", 3GPP DRAFT; R2-167883, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20161114 - 20161118 13 November 2016 (2016-11-13), XP051177628, Retrieved from the Internet: URL:http://www.3gpp.org/ftp/Meetings_3GPP_ SYNC/RAN2/Docs/ [retrieved on 2016-11-13]
- ZTE: "Discussion on layer 2 ProSe UE-to-network relay for feD2D", 3GPP DRAFT; R2-168147 DISCUSSION ON LAYER 2 PROSE UE-TO-NETWORK RELAY FOR FED2D, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG2, no. Reno, USA; 20161114 - 20161118 13 November 2016 (2016-11-13), XP051177834, Retrieved from the Internet: URL:http://www.3gpp.org/ftp/Meetings_3GPP_ SYNC/RAN2/Docs/ [retrieved on 2016-11-13]
- ERICSSON: "Reference models for Evolved ProSe UE-to-Network Relay", 3GPP DRAFT; R2-165242 - REFERENCE MODELS FOR EVOLVED PROSE UE-TO-NETWORK RELAY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Gothenburg, Sweden; 20160822 - 20160826 21 August 2016 (2016-08-21), XP051126831, Retrieved from the Internet: URL:http://www.3gpp.org/ftp/Meetings_3GPP_ SYNC/RAN2/Docs/ [retrieved on 2016-08-21]

## Description

### TECHNICAL FIELD

Embodiments of the present application relate to the technical field of communications, and in particular, relate to communication methods of a device-to-device system.

### BACKGROUND

With the development of Internet of everything, 3rd Generation Partnership Project (3GPP) standardizes machine type communication (MTC). The eMTC work of R12 and R13 has been basically completed, and the standardization of narrow band-Internet of Things (NB-IoT) is still in progress. The communication protocol version (R) 13 eMTC adds support for coverage enhancement and bandwidth limitation on the basis of supporting low cost. In general, eMTC user equipment (UE) has a radio frequency transceiving capability limited to 1.4 MHz, while the NB-IoT device has a radio frequency transceiving bandwidth limited to 180 kHz. The purpose of coverage enhancement is generally achieved through multiple repetitions of data transmission between the eNB and the eMTC/NB-IoT UE. In consideration of the low cost characteristics of the eMTC/NB-IoT device, it is generally desirable to extend the service life of the eMTC/NB-IoT device as much as possible. Coverage enhancement results in repeated transmission of the data packet for multiple times, and thus the power of the UE is rapidly consumed. In addition to eMTC devices and NB-IoT devices, wearable devices also have similar application requirements such as low cost, low power consumption/power saving, high data rate and the like.

However, sometimes, the eMTC device or the like itself has the characteristics of low power consumption, high data rate and low cost, but it is found in practical applications that the power of some eMTC devices is rapidly run out of, and in some cases, the eMTC device or the like cannot access the network for data and/or signaling transmission. Further relevant technologies are also known from the following documents.

HUAWEI HISILICON: "Summary of email discussion [95bis#15][LTE/FeD2D] Bearer modelling and adaptation layer", 3GPP DRAFT; R2-167883, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Reno, Nevada, USA; 20161114 - 20161118 13 November 2016 (2016-11-13), XP051177628 relates to a document about discussing how bearers are modelled and whether multiple remote UEs can be multiplexed in the same Uu bearer, and discussing whether adaptation layer for PC5 and Uu is needed and what would be the required functionalities.

ZTE: "Discussion on layer 2 ProSe UE-to-network relay for feD2D", 3GPP Draft; R2-168147 DISCUSSION ON LAYER 2 PROSE UE-TO-NETWORK RELAY FOR FED2D, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Reno, USA; 20161114 - 20161118 13 November 2016 (2016-11-13), XP051177834 relates to a document about analyzing the detailed design of radio protocol stack for Layer 2 UE to network relay.

WO 2016/163430 A1 (KYOCERA CORP [JP]) 13 October 2016 (2016-10-13); & EP 3 270 659 A1 (KYOCERA CORP [JP]) 17 January 2018 (2018-01-17) relates to a document about a wireless terminal and control method.

ERICSSON: "Reference models for Evolved ProSe UE-to-Network Relay", 3GPP Draft; R2-165242 - REFERENCE MODELS FOR EVOLVED PROSE UE-TO-NETWORK RELAY, 20160821 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Gothenburg, Sweden; 20160822 - 20160826 21 August 2016 (2016-08-21), XP051126831 relates to a document about studying the possibility of a common solution supporting a plurality of use cases, investigating potential impacts to protocol stack, procedure and signalling mechanisms, and studying path selection/switch between the cellular link (Uu air interface) and relay link.

ZTE: "Discussion on connection establishment and bearer setup", 3GPP Draft; R2-168149 DISCUSSION ON CONNECTION ESTABLISHMENT AND BEARER SETUP, 20161104 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Reno, USA; 20161114 - 20161118 4 November 2016 (2016-11-04), XP051192406 relates to a document about addressing initial connection establishment while evolved remote UE had no connection with evolved relay UE yet, and bearer setup for CP and UP relaying.

ZTE: "Discussion on connection setup procedure", 3GPP DRAFT; R2-166792 DISCUSSION ON D2D CONNECTION SETUP PROCEDURE, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Kaohsiung; 20161010-20161014 9 October 2016 (2016-10-09), XP051151247 relates to a document about discussing some potential impacts on connection setup procedures to support Layer 2 evolved UE-to-Network relay over PC5 sidelink.

### SUMMARY

The embodiments of the present application are intended to provide communication methods of a device-to-device system, to at least partially solve the above problems. The present disclosure provides a communication method of a device-to-device (D2D) system according to independent claim 1, and another communication method of D2D system according to independent claim 3. Further improvements and embodiments are provided in the dependent claims.

In an aspect, an embodiment of the present application also provides a communication method of a device-to-device system, as according to claim 1, performed by a remote UE.

In another aspect, an embodiment of the present application further provides a communication method of a device-to-device system, as according to claim 3, performed by a relay UE.

### BRIEF DESCRIPTION OF DRAWINGS

FIG. 1 is a flowchart of a communication method of a device-to-device system according to an embodiment of the present application;
FIG. 2 is another flowchart of a communication method of a device-to-device system according to an embodiment of the present application;
FIG. 3 is another flowchart of a communication method of a device-to-device system;
FIG. 4 is a flowchart of a data forwarding method;
FIG. 5 (a) is a schematic diagram of a tunnel DRB bearing only a remote UE SRB;
FIG. 5 (b) is a schematic diagram of a tunnel DRB bearing a remote UE SRB and a relay UE SRB;
FIG. 6 (a) is a schematic diagram of a tunnel DRB bearing only a remote UE Uu DRB;
FIG. 6 (b) is a schematic diagram of a tunnel DRB bearing a remote UE Uu DRB and a relay UE Uu DRB;
FIG. 7 is a structural diagram of a communication apparatus of a device-to-device system;
FIG. 8 is a another structural diagram of a communication apparatus of a device-to-device system; and
FIG. 9 is an another structural diagram of a communication apparatus of a device-to-device system.

### DETAILED DESCRIPTION

Embodiments of the present invention will be described in detail with reference to the drawings.

It is to be understood that the specific embodiments described herein are merely intended to explain and are not to limit the embodiments of the present invention.

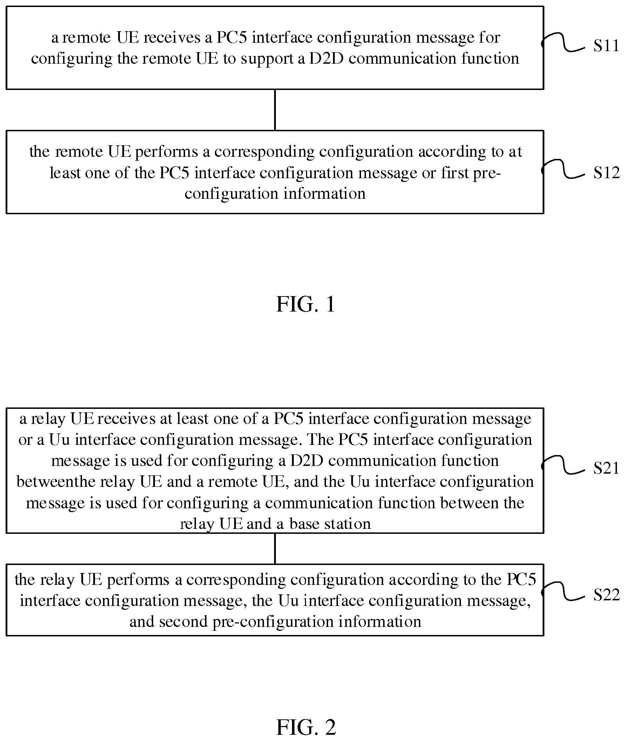

As shown in FIG. 1, an embodiment of the present application provides a communication method of a device-to-device (D2D) system. The method includes steps described below.

In S11, a remote UE receives a PC5 interface configuration message for configuring the remote UE to support a D2D communication function.

In S12, the remote UE performs a corresponding configuration according to at least one of the PC5 interface configuration message, as according to the invention, or first pre-configuration information, in examples not covered by the claimed invention.

For the communication method of the D2D system provided in the embodiment of the present invention, the remote UE receives the PC5 interface configuration message and performs the corresponding configuration according to at least one of the PC5 interface configuration message, as according to the invention, or the first pre-configuration information, in examples not covered by the claimed invention. Since the PC5 interface configuration message is used for configuring the remote UE to support the D2D communication function, a relay UE may forward signaling and data of the remote UE, so that the remote UE may access the communication network via the relay UE and the power consumption of the remote UE is greatly reduced.

It is to be noted that the UE mentioned in the embodiments of the present application include, but is not limited to, a wearable UE, a machine type communication (MTC) device, an Internet of Things (IoT) device, and the like.

The wearable/eMTC/NB-IoT device (which may be referred to as a remote UE for short) is supported to access the network in a manner of D2D communication. That is, the remote UE may be connected to a relay node that the UE acts as (referred to as relay UE for short), communicate with the relay UE in a D2D manner, and communicate with the network via the relay UE. The D2D communication between the remote UE and the relay UE includes, but is not limited to, sidelink/PC5 communication, wireless local area network (WLAN) communication, and Bluetooth communication.

For a scenario in which the remote UE accesses the relay UE via the sidelink/PCS, in S11, the step in which the remote UE receives the PC5 interface configuration message includes that:
the remote UE receives the PC5 interface configuration message directly from a base station, or receives the PC5 interface configuration message via the relay UE. Since the PC5 interface configuration message is mainly used for transmitting some signaling and the amount of data is small, the remote UE may receive the PC5 interface configuration message directly from the base station instead of through the relay UE.

In the above embodiment, the PC5 interface configuration message includes at least one of: configuration information for transmitting a remote UE signal radio bearer (SRB) via a PC5 interface or configuration information for transmitting a remote UE Uu data radio bearer (DRB) via the PC5 interface, and according to the invention both kinds of configuration information. That is, the PC5 interface configuration message is used for configuring the remote UE SRB for transmitting signaling, and is used for configuring the remote UE Uu DRB for transmitting data.

The configuration information for transmitting the remote UE SRB via the PC5 interface includes remote UE SRB-related configuration information and PC5 bearer-related configuration information corresponding to the remote UE SRB-related configuration information. The there mote UE SRB-related configuration information includes one or more of: an identifier (ID) of the remote UE SRB, an ID of a logical channel corresponding to the remote UE SRB, radio link control protocol acknowledged mode (RLC AM) configuration information corresponding to the remote UE SRB, radio link control protocol unacknowledged mode (RLC UM) configuration information corresponding to the remote UE Uu SRB, a priority guaranteed bit rate (PBR), and a bucket size duration (BSD).

The configuration information for transmitting the remote UE Uu DRB via the PC5 interface includes remote UE Uu DRB-realted configuration information and PC5 bearer-related configuration information corresponding to the remote UE Uu DRB-realted configuration information. The remote UE Uu DRB-related configuration information includes one or more of: an ID of the remote UE Uu DRB, an ID of a logical channel corresponding to the remote UE Uu DRB, RLC AM configuration information corresponding to the remote UE Uu DRB, RLC UM configuration information corresponding to the remote UE Uu DRB, a PBR, and a BSD.

The PC5 bearer-related configuration information corresponding to each of the remote UE SRB-related configuration information and the remote UE Uu DRB-related configuration information includes one or more of: an ID of a PC5 bearer, an ID of a PC5 logical channel, RLC AM configuration information corresponding to the PC5 bearer, RLC UM configuration information corresponding to the PC5 bearer, a PBR, and a BSD.

After the remote UE receives the PC5 interface configuration message sent by the base station or the relay UE, the remote UE performs the corresponding configuration according to at least one of the first pre-configuration information (in examples not covered by the claimed invention) I or the received PC5 interface configuration message (according to the claimed invention).

During configuration, in examples not covered by the claimed invention, different configurations may be performed according to different corresponding PC5 interface configuration messages. For example, in a case that a PC5 interface configuration message is used for transmitting the remote UE SRB via the PC5 interface, the first pre-configuration information and the PC5 interface configuration message may be used to complete the configuration of the remote UE SRB. For example, in a case that a PC5 interface configuration message is used for transmitting the remote UE Uu DRB via the PC5 interface, the PC5 interface configuration message may be used to complete the configuration of the remote UE Uu DRB.

For example, the first pre-configuration information is configured in the remote UE for performing SRB configuration. Optionally, the first pre-configuration information includes at least one of: ID information of a remote UE SRB, ID information of a logical channel corresponding to the remote UE SRB, ID information of a PC5 bearer corresponding to the remote UE SRB, ID information of a PC5 logical channel corresponding to the remote UE SRB, RLC AM configuration information corresponding to the PC5 logical channel corresponding to the remote UE SRB, RLC UM configuration information corresponding to the PC5 logical channel corresponding to the remote UE SRB, a PBR and a BSD.

It is to be noted that the configuration of a control plane bearer and the configuration of a data plane bearer may be performed sequentially or simultaneously, and may be interleaved with each other in time, and the embodiments of the present application is not limited thereto. For example, a part of the remote UE SRB may be first configured, then the remote UE Uu DRB is configured, and then the remote UE Uu DRB is configured.

Optionally, after the remote UE performs the corresponding configuration according to at leats one of the PC5 interface configuration message or the first pre-configuration information, the method further includes a step described below.

The remote UE performs communication with the base station via the relay UE based on the configuration. Optionally, data, radio resource control (RRC) signaling, non-access stratum (NAS) messages, and the like may be transmitted through the communication between the remote UE and the base station, which are not limited to embodiments of the present application.

In summary, in the embodiment, the remote UE performs, based on at least one of the message content of the PC5 interface configuration message, as according to the invention, or the trigger of the PC5 interface configuration message and according to the first pre-configuration information, in examples not covered by the claimed invention, relevant configuration for the remote UE to access the communication network or perform communication via the relay UE. For example, the relevant configuration may include the configuration of a radio bearer for information interaction between a remote UE and a network element in a communication network via a relay UE, where the radio bearer may include at least one of SRB or DRB.

Correspondingly, as shown in FIG. 2, an embodiment of the present application further provides a communication method of a device-to-device system. The method includes steps described below.

In S21, a relay UE receives at least one of a PC5 interface configuration message or a Uu interface configuration message, and according to the invention both messages.

The PC5 interface configuration message is used for configuring a D2D communication function between the relay UE and a remote UE, and the Uu interface configuration message is used for configuring a communication function between the relay UE and a base station.

In S22, the relay UE performs a corresponding configuration according to the PC5 interface configuration message, the Uu interface configuration message, and second pre-configuration information.

In the communication method of a device-to-device system provided in the embodiment of the present application, the relay UE receives the PC5 interface configuration message and the Uu interface configuration message, and then performs the corresponding configuration according to the PC5 interface configuration message, the Uu interface configuration message and the second pre-configuration information, so that the relay UE supports D2D communication with the remote UE and forwards communication information to the base station.

In S21, the PC5 interface configuration message received by the relay UE includes relevant configuration information for transmitting a remote UE SRB via a relay UE PC5 interface and relevant configuration information for transmitting a remote UE Uu DRB via the relay UE PC5 interface.

In the above embodiment, the configuration information for transmitting the remote UE SRB via the relay UE PC5 interface includes: remote UE SRB-related configuration information and PC5 bearer-related configuration information corresponding to the remote UE SRB-related configuration information; and the configuration information for transmitting the remote UE Uu DRB via the relay UE PC5 interface includes: remote UE Uu DRB-related configuration information and PC5 bearer-related configuration information corresponding to the remote UE Uu DRB-related configuration information.

Optionally, in S22, the Uu interface configuration message received by the relay UE may include: a tunnel DRB configuration message and/or a tunnel SRB configuration message; and/or a relay UE Uu DRB configuration message and/or a relay UE SRB configuration message. Optionally, the Uu interface configuration message may be used for configuring the relay UE to establish, modify or delete a tunnel SRB and/or a tunnel DRB between the relay UE and the base station.

The tunnel DRB or the tunnel SRB is used for communication between the relay UE and the base station. The second pre-configuration information is configured in the relay UE, and is used for performing corresponding SRB configuration.

Optionally, for the tunnel DRB, the tunnel DRB configuration message includes one or more of: tunnel DRB-realted configuration information, the remote UE Uu DRB-related configuration information, relay UE Uu DRB-related configuration information, and the the remote UE SRB-related configuration information.

For example, the tunnel DRB-realted configuration information includes one or more of: ID information of the tunnel DRB, ID information of a logical channel corresponding to the tunnel DRB, quality of service class identifier (QCI) information corresponding to the tunnel DRB, RLC AM configuration information corresponding to the tunnel DRB, RLC UM configuration information, a PBR, a BSD, or a logical channel group ID.

In the above embodiment, the remote UE SRB-related configuration information includes one or more of: ID information of the remote UE, ID information of the remote UE SRB, ID information of a logical channel corresponding to the remote UE SRB, an ID of a logical channel group corresponding to the remote UE SRB, RLC AM configuration information corresponding to the remote UE SRB, RLC UM configuration information corresponding to remote UE SRB, a PBR, or a BSD.

In the above embodiment, the remote UE Uu DRB-related configuration information includes one or more of: the ID information of the remote UE, ID information of the remote UE Uu DRB, QCI information corresponding to the remote UE Uu DRB, ID information of a logical channel corresponding to the remote UE Uu DRB, an ID of a logical channel group corresponding to the remote UE Uu DRB, RLC AM configuration information corresponding to the remote UE Uu DRB, RLC UM configuration information corresponding to remote UE Uu DRB, a PBR, and a BSD.

For example, the relay UE Uu DRB-related configuration information includes one or more of: ID information of the relay UE Uu DRB, QCI information corresponding to the relay UE Uu DRB, ID information of a logical channel corresponding to the relay UE Uu DRB, an ID of a logical channel group corresponding to the relay UE Uu DRB, RLC AM configuration information corresponding to the relay UE Uu DRB, RLC UM configuration information corresponding to relay UE Uu DRB, a PBR, and a BSD.

Optionally, for the tunnel SRB, the tunnel SRB configuration message may include one or more of: tunnel SRB-related configuration information, the remote UE SRB-related configuration information, and relay UE SRB-related configuration information.

For example, the tunnel SRB-related configuration information includes one or more of: ID information of the tunnel SRB, ID information of a logical channel corresponding to the tunnel SRB, QCI information corresponding to the tunnel SRB, RLC AM configuration information corresponding to the tunnel SRB, RLC UM configuration information, a PBR, a BSD, and a logical channel group ID.

Optionally, for the relay UE SRB, the relay UE SRB configuration message may include one or more of: relay UE SRB-related configuration message, and the remote UE SRB-related configuration message.

For example, the relay UE Uu DRB configuration message includes one or more of: relay UE Uu DRB-related configuration information, the remote UE Uu DRB-related configuration information, and the remote UE SRB-related configuration information.

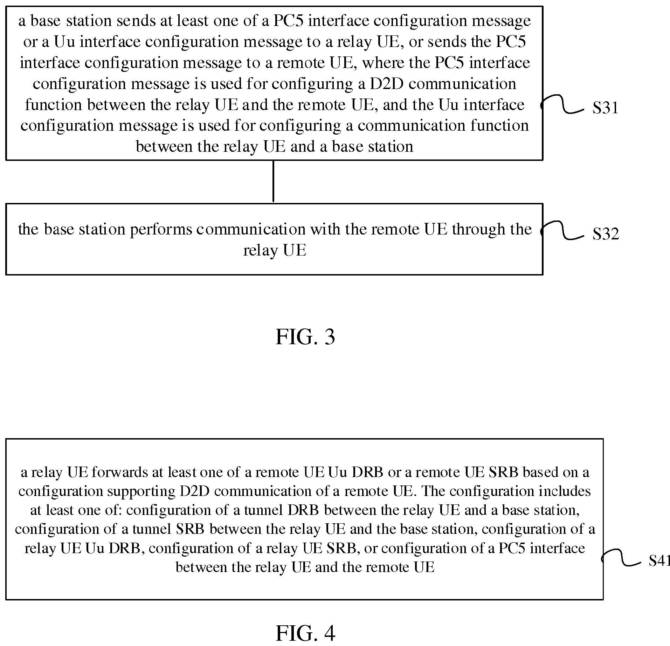

Correspondingly, as shown in FIG. 3, an example not covered by the claimed invention further provides a communication method of a device-to-device system. The method includes steps described below.

In S31, a base station sends at least one of a PC5 interface configuration message or a Uu interface configuration message to a relay UE, or sends the PC5 interface configuration message to a remote UE, where the PC5 interface configuration message is used for configuring a D2D communication function between the relay UE and the remote UE, and the Uu interface configuration message is used for configuring a communication function between the relay UE and a base station.

In S32, the base station performs communication with the remote UE through the relay UE.

In the communication method of a device-to-device system, the base station can send at least one of the PC5 interface configuration message or the Uu interface configuration message to the relay UE, or send the PC5 interface configuration message to the remote UE, and then performs communication with the remote UE through the relay UE. In this way, the D2D communication function between the relay UE and the remote UE can be configured through the PC5 interface configuration message and the communication function between the relay UE and the base station can be configured through the Uu interface configuration message, so that the relay UE supports D2D communication with the remote UE, and power consumption of the remote UE is greatly reduced.

Optionally, the PC5 interface configuration message may include: relevant configuration information for transmitting a remote UE SRB via a relay UE PC5 interface and relevant configuration information for transmitting a remote UE Uu DRB via the relay UE PC5 interface; or at least one of configuration information for transmitting the remote UE SRB via a remote UE PC5 interface or configuration information for transmitting the remote UE Uu DRB via the PC5 interface.

Optionally, the Uu interface configuration message may include: a tunnel DRB configuration message and/or a tunnel SRB configuration message; and/or a relay UE Uu DRB configuration message and/or a relay UE SRB configuration message. The Uu interface configuration message may be used for configuring the relay UE to establish, modify or delete a tunnel SRB and/or a tunnel DRB between the relay UE and the base station; and the tunnel DRB or the tunnel SRB may be used for communication between the relay UE and the base station.

For example, the tunnel DRB configuration message may include one or more of: tunnel DRB-related configuration information, remote UE Uu DRB-related configuration information, relay UE Uu DRB-related configuration information, and remote UE SRB-related configuration information.

For example, the tunnel SRB configuration message includes one or more of: tunnel SRB-related configuration information, the remote UE SRB-related configuration information, and relay UE SRB-related configuration information.

Optionally, the tunnel SRB may include at least one of the remote UE SRB or the relay UE SRB; and the tunnel DRB includes at least one of the remote UE Uu DRB or the relay UE Uu DRB or the remote UE SRB. Optionally, the tunnel DRB does not have a corresponding evolved packet system (EPS) bearer.

Optionally, the relay UE Uu DRB may bear at least one of data in the relay UE Uu DRB, or the remote UE Uu DRB, or the remote UE SRB; and a relay UE SRB may bear at least one of signaling in the relay UE SRB or the remote UE SRB.

Correspondingly, as shown in FIG. 4, an example not covered by the claimed invention further provides a data forwarding method. The method includes a step described below.

In S41, a relay UE forwards at least one of a remote UE Uu DRB or a remote UE SRB based on a configuration supporting D2D communication of a remote UE. The configuration includes at least one of: configuration of a tunnel DRB between the relay UE and a base station, configuration of a tunnel SRB between the relay UE and the base station, configuration of a relay UE Uu DRB, configuration of a relay UE SRB, or configuration of a PC5 interface between the relay UE and the remote UE.

Optionally, during the forwarding of the remote UE Uu DRB, the relay UE receives data, and then determines, according to object indication information carried in the received data, a remote UE corresponding to the data, and sends the received data to the remote UE.

Optionally, the object indication information may be a UE ID, and the UE ID may be allocated by the base station to the remote UE or allocated by the relay UE to the remote UE. The remote UE may alternatively be implicitly identified by using a sequence number of the remote UE under the relay UE.

Optionally, the relay UE forwards the remote UE Uu DRB based on at least one of the following mapping relationships:
a mapping relationship between a remote UE Uu DRB ID or a logical channel ID and the tunnel DRB;
a mapping relationship between the remote UE Uu DRB ID or the logical channel ID and the relay UE Uu DRB;
a mapping relationship between the remote UE Uu DRB ID or the logical channel ID and a PC bearer ID or a PC5 logical channel;
a mapping relationship between a PC5 bearer ID or a PC5 logical channel ID and the tunnel DRB; and
a mapping relationship between the PC5 bearer ID or the PC5 logical channel ID and the relay UE Uu DRB.

Optionally, the relay UE forwards the remote UE SRB based on at least one of the following mapping relationships:
a mapping relationship between a remote UE SRB ID or a logical channel ID and a tunnel DRB;
a mapping relationship between the remote UE SRB ID or the logical channel ID and the tunnel SRB;
a mapping relationship between the remote UE SRB ID or the logical channel ID and the relay UE Uu DRB;
a mapping relationship between the remote UE SRB ID or the logical channel ID and the relay UE SRB;
a mapping relationship between the remote UE SRB ID or the logical channel ID and a PC5 bearer ID or a PC5 logical channel;
a mapping relationship between the PC5 bearer ID or the PC5 logical channel ID and the tunnel SRB; and
a mapping relationship between the PC5 bearer ID or the PC5 logical channel ID and the relay UE SRB.

Optionally, the mapping relationship is specified by the base station or obtained by querying a mapping table of QCI and prose per packet priority (PPPP). The mapping table of the QCI and the PPPP may be delivered to the relay UE in the form of the management object (MO), or may be preconfigured on the relay UE.

For example, for downlink information and in S41, the step in which the relay UE forwards at least one of the remote UE Uu DRB or the remote UE SRB based on the configuration supporting the D2D communication of the remote UE may include the steps described below:
receiving downlink data from the base station at a corresponding Uu interface;
determining, according to object indication information carried in received data, a remote UE corresponding to the data, which includes: determining, according to object indication information carried in the received downlink data, a target UE corresponding to the downlink data; and
mapping downlink data received from the base station to a corresponding PC5 interface according to configuration information of the remote UE at the relay UE.

For example, for uplink information and in S41, the step in which the relay UE forwards at least one of the remote UE Uu DRB or the remote UE SRB based on the configuration supporting the D2D communication of the remote UE may include the steps described below:
receiving uplink data from the remote UE at a corresponding PC5 interface;
determining, according to object indication information carried in received data, a remote UE corresponding to the data, which includes: determining, according to object indication information carried in the received uplink data, a source UE corresponding to the uplink data; and mapping the uplink data received from the source UE to a corresponding tunnel DRB or tunnel SRB or relay UE Uu DRB or relay UE SRB according to configuration information of the remote UE at the relay UE.

The communication method of a device-to-device system provided in the embodiments of the present application will be described below in detail through specific embodiments.

To support forwarding of a Uu SRB of a remote UE between a relay UE and a base station, the concept of a tunnel SRB is proposed in embodiments of the present application, wherein, however, a tunnel SRB as such and in isolation is not covered by the claimed invention.

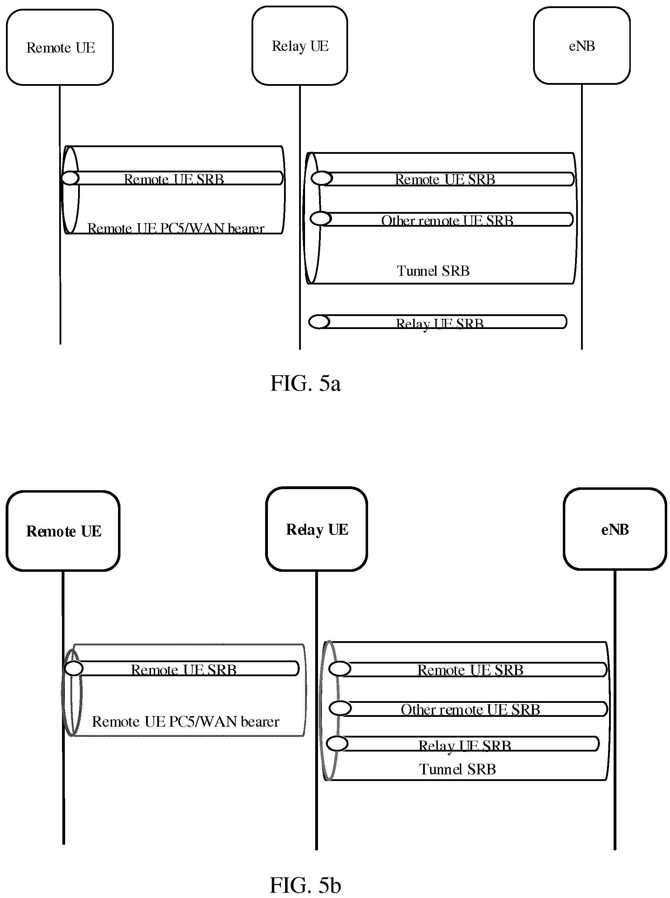

The tunnel SRB is located between the relay UE and the base station (e.g., an evolved eNB), and is configured and managed by the base station. The tunnel SRB may carry only the SRB of the remote UE, as shown in FIG. 5 (a), and may also carry the SRB of the remote UE and the SRB of the relay UE, as shown in FIG. 5 (b).

A message sent by the eNB to the relay UE for performing SRB configuration includes at least one of: configuration information of the tunnel SRB, remote UE SRB, or relay UE SRB. The configuration information of the tunnel SRB includes, but is not limited to ID information of the tunnel SRB, ID information of a logical channel corresponding to the tunnel SRB, an ID of a logical channel group corresponding to the tunnel SRB, RLC AM configuration information corresponding to the tunnel SRB, RLC UM configuration information, a PBR, a BSD, and the like. Configuration information of the remote UE and/or the relay UE includes: ID information of the SRB, ID information of a logical channel corresponding to the SRB, an ID of a logical channel group corresponding to the SRB, RLC AM configuration information corresponding to the SRB, RLC UM configuration information, a PBR, a BSD, and the like.

The message sent by the eNB to the relay UE for configuring the tunnel SRB includes at least one of the following SRBs: SRB0, SRB1, or SRB2. The tunnel SRB may be configured to carry the corresponding SRB of each remote UE. That is, a tunnel SRB 0 bears a SRB 0 of the remote UE, a tunnel SBR 1 bears an SRB 1 of the remote UE, and a tunnel SRB 2 bears an SRB 2 of the remote UE.

Optionally, the eNB sends a configuration message to the remote UE and the relay UE to configure the mapping relationship between a remote UE SRB and a PC5 bearer.

Optionally, the above RLC AM configuration information includes at least one of the following: RLC AM mode sequence number-length, t-PollRetransmit, pollPDU, pollByte, maxRetxThreshold (also referred to as the maximum number of retransmissions), t-Reordering, or t-StatusProhibit. The RLC UM mode configuration information includes any combination of: UM mode sn-FieldLength and t-Reordering.

Optionally, a downlink SRB and an uplink SRB of the remote UE may be forwarded at the relay UE.

For the downlink SRB, after the relay UE receives the content on the tunnel SRB at the Uu interface based on the configuration information of the tunnel SRB and the remote UE Uu SRB as described above, the relay UE determines a target UE according to the UE ID in the data packet header. The content is mapped to a suitable PC5 interface bearer according to the mapping relationship between the tunnel SRB ID (or logical channel ID) in the data packet header or the remote UE Uu SRB ID (or logical channel ID) and the PC5 interface bearer ID (or logical channel ID).

For the uplink SRB, in addition to the configuration information of the tunnel SRB and the remote UE Uu SRB as described above, the base station also configures to the relay UE a mapping relationship between the remote UE Uu SRB ID (or logical channel ID) or the PC5 bearer ID (or PC5 logical channel ID) and the tunnel SRB. After the relay UE receives the content on the PC5 interface, the relay UE determines, through the source UE ID in the data packet header, the UE from which the content is sent, and maps the content to a corresponding SRB through a mapping relationship between the remote UE Uu SRB ID (or the logical channel ID) in the data packet header or the PC5 bearer ID (or logical channel ID) and the tunnel SRB.

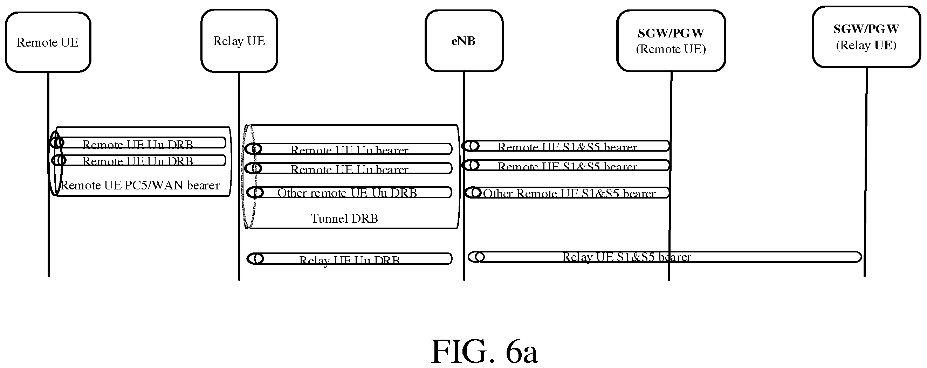

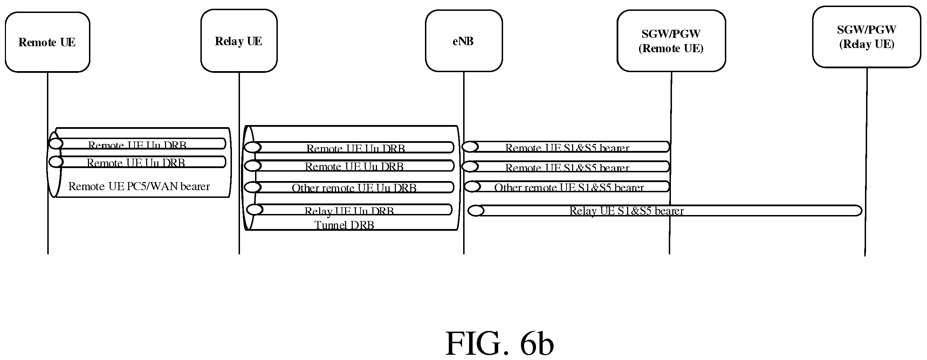

Optionally, the tunnel DRB proposed in the embodiments of the present application may have two implementation methods. A tunnel DRB as such and in isolation is not covered by the claimed invention. As shown in FIG. 6 (a), a tunnel DRB is established between the eNB and the relay UE and is used for forwarding data of the remote UE only. As shown in FIG. 6 (b), a tunnel DRB is established between the eNB and the relay UE, and is used for forwarding data of the remote UE and the relay UE.

### Embodiment 1

The embodiment describes the flow in which the eNB triggers establishment of the tunnel DRB. As shown in FIG. 6, it is assumed that PC5 connection has been established between a remote UE and a relay UE, and that the remote UE has completed the attach flow in the core network. The eNB triggers the flow of establishing the tunnel DRB and adds the Uu DRB of the remote UE or the Uu DRBs of the remote UE and the relay UE to the newly established tunnel DRB. The new-establishment message should include at least one of, but not limited to, configuration information of the Uu DRB of the tunnel DRB and the remote UE, or configuration information of Uu DRBs of the remote UE and the relay UE; include, but not limited to, ID information of the tunnel DRB, ID information of a logical channel corresponding to the tunnel DRB, QCI information corresponding to the tunnel DRB, a logical channel group ID, RLC AM configuration information corresponding to the tunnel DRB, RLC UM configuration information, a PBR, a BSD, and the like; include, but not limited to, configuration information of Uu DRBs of the remote UE and/or the relay UE; include, but not limited to, ID information of the Uu DRB, QCI information corresponding to the Uu DRB, ID information of the logical channel corresponding to the Uu DRB, a logical channel group ID, RLC AM configuration information corresponding to the Uu DRB, RLC UM configuration information, the PBR, the BSD, and the like.

Optionally, the above RLC AM configuration information includes at least one of the following: RLC AM mode sequence number-length, t-PollRetransmit, pollPDU, pollByte, maxRetxThreshold (also referred to as the maximum number of retransmissions), t-Reordering, and t-StatusProhibit. The RLC UM mode configuration information includes any combination of: UM mode sn-FieldLength and t-Reordering.

Optionally, the eNB triggers the establishment flow of the tunnel DRB for reasons that may include, but are not limited to, the following cases.
Case 1: A mobility management entity (MME) initiates an E-RAB Setup Request for the remote UE, or the remote UE and/or the relay UE, and QoS information of the EPS bearer is carried. If the eNB determines that currently no tunnel DRB that meets the QoS requirement exists, the eNB triggers the tunnel DRB establishment flow, and adds the Uu DRB corresponding to the EPS bearer of the remote UE, or the remote UE and/or the relay UE to the newly established tunnel DRB.
Case 2: The eNB maps a certain Uu DRB of a certain remote UE, or a remote UE and/or a relay UE to a new tunnel DRB. This may be because the MME initiates a modification flow of the EPS bearer of the remote UE, or the remote UE and/or the relay UE so that the original tunnel DRB is no longer able to meet the QoS requirement.

### Embodiment 2

As shown in FIGS. 6a) and 6b), the present embodiment describes the flow in which the eNB triggers modification of the tunnel DRB.

The eNB triggers the flow of modifying the tunnel DRB. The modification message should include configuration information of the tunnel DRB and the remote UE Uu DRB, or configuration information of Uu DRBs of the remote UE and the relay UE; include at least one of, but not limited to, ID information of the tunnel DRB, ID information of a logical channel corresponding to the tunnel DRB, QCI information corresponding to the tunnel DRB, a logical channel group ID, RLC AM configuration information corresponding to the tunnel DRB, RLC UM configuration information, a PBR, a BSD, and the like; include, but not limited to, configuration information of Uu DRBs of the remote UE and/or the relay UE; include, but not limited to, ID information of the Uu DRB, QCI information corresponding to the Uu DRB, ID information of a logical channel corresponding to the Uu DRB, a logical channel group ID, RLC AM configuration information corresponding to the Uu DRB, RLC UM configuration information, the PBR, the BSD, and the like.

Optionally, the above RLC AM configuration information includes at least one of the following: RLC AM mode sequence number-length, t-PollRetransmit, pollPDU, pollByte, maxRetxThreshold (also referred to as the maximum number of retransmissions), t-Reordering, and t-StatusProhibit. The RLC UM mode configuration information includes any combination of: UM mode sn-FieldLength and t-Reordering.

The eNB triggers the modification flow of the tunnel DRB for reasons that may include, but are not limited to, the following cases.
Case 1: The MME initiates a request for establishing an EPS bearer for the remote UE, or the remote UE and/or the relay UE. QoS information of the EPS bearer is carried. After the eNB receives the request, the eNB determines a tunnel DRB that meets the QoS requirement, triggers the modification flow of the tunnel DRB, and adds the Uu DRB of the remote UE or Uu DRBs of the remote UE and/or the relay UE.
Case 2: The MME initiates a request for modifying the EPS bearer for the remote UE, or the remote UE and/or the relay UE. The latest QoS information of the EPS bearer is carried. After the eNB receives the request, the eNB determines configuration information for modifying the tunnel DRB, triggers the modification flow of the tunnel DRB, and performs modification of the Uu DRB of the remote UE or the Uu DRBs of the remote UE and/or the relay UE. Or after the eNB receives the request, the eNB determines to configure the Uu DRB of the remote UE or the Uu DRBs of the remote UE and/or the relay UE into a different tunnel DRB. Then, a modification flow of the tunnel DRB is triggered to delete the mapping relationship between the Uu DRB of the remote UE or the Uu DRBs of the remote UE and/or the relay UE and the tunnel DRB.
Case 3: The MME initiates a request for releasing the EPS bearer for the remote UE, or the remote UE and/or the relay UE. After the eNB receives the request, the eNB determines that other Uu DRBs still exist in the tunnel DRB, and then triggers the modification flow of the tunnel DRB to delete the Uu DRB of the remote UE, or Uu DRBs of the remote UE and/or the relay UE.

### Embodiment 3

As shown in FIG. 6, the embodiment describes a flow in which an eNB triggers release of a tunnel DRB.

The eNB finds that all Uu DRBs of the remote UE or Uu DRBs of the remote UE and/or the relay UE in the tunnel DRB have been deleted, and then releases the tunnel DRB.

### Embodiment 4 (not covered by the claimed invention)

The embodiment describes how a relay UE forwards downlink (DL) data of a remote UE and preforms QoS management.

In the method 1, based on configuration information of the tunnel DRB and the remote UE Uu DRB as described above, after the relay UE receives data on the tunnel DRB on the Uu interface, the relay UE determines a target UE according to the UE ID in the data packet header; and queries a table to obtain a PPPP value on the PC5 interface through QCI corresponding to the Uu DRB of the tunnel DRB or the remote UE. Then, delivery is performed on the corresponding PC5 interface bearer. The mapping table of QCI and PPPP is delivered to the relay UE in the form of the management object (MO).

In the method 2, in addition to the configuration information of the tunnel DRB and the remote UE Uu DRB as described above, the base station also configures to the relay UE the PC5 interface bearer/logical channel ID corresponding to the remote UE Uu DRB (or logical channel). After the relay UE receives the data on the tunnel DRB on the Uu interface, the relay UE determines a target address through the UE ID in the data packet header; and maps the data to a suitable PC5 interface bearer according to a mapping relationship between the remote UE Uu DRB ID (or logical channel ID) and the PC interface bearer/or logical channel ID.

### Embodiment 5 (not covered by the claimed invention)

The embodiment describes how a relay UE forwards uplink (UL) data of a remote UE and preforms QoS management.

In the method 1, based on configuration information of the tunnel DRB and the remote UE Uu DRB as described above, after the relay UE receives data on the PC5 interface, the relay UE determines, according to the source UE ID in the data packet, a target UE from which the data is sent; and maps the data to a corresponding tunnel DRB according to the mapping relationship between the PPPP value and the tunnel DRB QCI. The mapping table of QCI and PPPP is delivered to the relay UE in the form of the management object (MO).

In the method 2, in addition to the configuration information of the tunnel DRB and the remote UE Uu DRB as described above, the base station also configures a mapping relationship between the remote UE Uu DRB ID (or logical channel ID) or the PC5 logical channel ID and the tunnel DRB to the relay UE. After the relay UE receives the data on the PC5 interface, the relay UE determines, through the source UE ID in the data packet header, the UE from which the data is sent, and maps the data to a corresponding DRB through a mapping relationship between the remote UE Uu DRB ID (or logical channel ID) or the PC5 logical channel ID and the tunnel DRB.

### Embodiment 6

The embodiment describes the flow in which the eNB triggers establishment of the tunnel SRB.

The eNB triggers the flow of establishing the tunnel SRB and adds the SRB of the remote UE or the SRBs of the remote UE and the relay UE to the newly established tunnel SRB. The new-establishment message should include at least one of, but not limited to, configuration information of the tunnel SRB and the remote UE SRB, or configuration information of SRBs of the remote UE and the relay UE; include, but not limited to, ID information of the tunnel SRB, ID information of a logical channel corresponding to the tunnel SRB, QCI information corresponding to the tunnel SRB, a logical channel group ID, RLC AM configuration information corresponding to the tunnel SRB, RLC UM configuration information, a PBR, a BSD, and the like; include, but not limited to, configuration information of SRBs of the remote UE and/or the relay UE; include, but not limited to, the ID of the remote UE, ID information of the SRBs of the remote UE and/or the relay UE, QCI information corresponding to the SRBs of the remote UE and/or the relay UE, ID information of the logical channel corresponding to the SRBs of the remote UE and/or the relay UE, a logical channel group ID, RLC AM configuration information corresponding to the SRBs of the remote UE and/or the relay UE, RLC UM configuration information, the PBR, the BSD, and the like.

Optionally, the above RLC AM configuration information includes at least one of the following: RLC AM mode sequence number-length, t-PollRetransmit, pollPDU, pollByte, maxRetxThreshold (also referred to as the maximum number of retransmissions), t-Reordering, and t-StatusProhibit. The RLC UM mode configuration information includes any combination of: UM mode sn-FieldLength and t-Reordering.

Optionally, the eNB triggers the establishment flow of the tunnel DRB for reasons that may include, but are not limited to, the following case. The eNB maps a certain SRB of a certain remote UE, or a remote UE and/or a relay UE to a new tunnel SRB.

### Embodiment 7 (not covered by the claimed invention)

The embodiment describes how a relay UE forwards DL RRC signaling of a remote UE and preforms QoS management.

In addition to the configuration information of the tunnel SRB and the remote UE SRB as described above, the base station also configures to the relay UE the PC5 interface bearer/logical channel ID corresponding to the remote UE SRB (or logical channel). After the relay UE receives the RRC signaling on the tunnel SRB on the Uu interface, the relay UE determines a target address through the UE ID in the data packet header; and maps the RRC signaling to a suitable PC5 interface bearer according to a mapping relationship between the remote UE SRB ID (or logical channel ID) and the PC interface bearer/or logical channel ID.

### Embodiment 8 (not covered by the claimed invention)

The embodiment describes how a relay UE forwards UL RRC signaling of a remote UE and preforms QoS management.

In addition to the configuration information of the tunnel SRB and the remote UE SRB as described above, the base station also configures to the relay UE a mapping relationship between the remote UE SRB ID (or logical channel ID) or the PC5 logical channel ID and the tunnel SRB.

After the relay UE receives the RRC signaling on the PC5 interface, the relay UE determines, through the source UE ID in the data packet, the UE from which the RRC signaling is sent, and maps the data to a corresponding tunnel SRB through a mapping relationship between the remote UE SRB ID (logical channel ID) or the PC5 logical channel ID and the tunnel SRB.

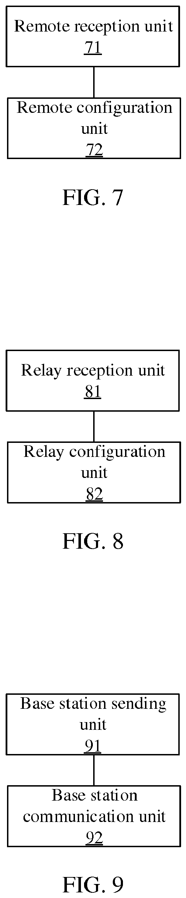

Correspondingly, as shown in FIG. 7, an example not covered by the claimed invention further provides a communication apparatus of a device-to-device system. The apparatus includes a remote reception unit 71 and a remote configuration unit 72.

The remote reception unit 71 is configured to receive a PC5 interface configuration message. The PC5 interface configuration message is used for configuring a remote UE to support a D2D communication function.

The remote configuration unit 72 is configured to perform a corresponding configuration according to at least one of the PC5 interface configuration message or first pre-configuration information.

For the communication apparatus of a device-to-device system provided in the embodiment of the present invention, the remote UE can receive the PC5 interface configuration message and performs corresponding configuration according to at least one of the PC5 interface configuration message or the first pre-configuration information. Since the PC5 interface configuration message may be used for configuring the remote UE to support the D2D communication function, the relay UE may forward signaling and data of the remote UE, so that the remote UE may access the communication network via the relay UE, and the power consumption of the remote UE is greatly reduced.

Optionally, the remote reception unit 71 is configured to: receive the PC5 interface configuration message directly from a base station, or receive the PC5 interface configuration message via a relay UE.

Optionally, the PC5 interface configuration message includes at least one of configuration information for transmitting a remote UE SRB via a PC5 interface or configuration information for transmitting a remote UE Uu DRB via the PC5 interface.

Optionally, the configuration information for transmitting the remote UE SRB via the PC5 interface includes: remote UE SRB-related configuration information and PC5 bearer-related configuration information corresponding to the remote UE SRB-related configuration information; and the configuration information for transmitting the remote UE Uu DRB via the PC5 interface includes: remote UE Uu DRB-related configuration information and PC5 bearer-related configuration information corresponding to the remote UE Uu DRB-related configuration information.

Optionally, the remote UE SRB-related configuration information includes at least one of: an ID of the remote UE SRB, an ID of a logical channel corresponding to the remote UE SRB, RLC AM configuration information corresponding to the remote UE SRB, RLC UM configuration information corresponding to a remote UE Uu SRB, a PBR, or BSD.

The remote UE Uu DRB-related configuration information includes at least one of: an ID of the remote UE Uu DRB, an ID of a logical channel corresponding to the remote UE Uu DRB, RLC AM configuration information corresponding to the remote UE Uu DRB, RLC UM configuration information corresponding to the remote UE Uu DRB, a PBR, or a BSD.

The PC5 bearer-related configuration information includes at least one of: an ID of the PC5 bearer, an ID of a PC5 logical channel, RLC AM configuration information corresponding to the PC5 bearer, RLC UM configuration information corresponding to the PC5 bearer, a PBR, or a BSD.

Correspondingly, as shown in FIG. 8, an example not covered by the claimed invention further provides a communication apparatus of a device-to-device system. The apparatus includes a relay reception unit 81 and a relay configuration unit 82.

The relay reception unit 81 is configured to receive at least one of a PC5 interface configuration message or a Uu interface configuration message. The PC5 interface configuration message is used for configuring a D2D communication function between a relay UE and a remote UE, and the Uu interface configuration message is used for configuring a communication function between the relay UE and a base station.

The relay configuration unit 82 is configured to perform a corresponding configuration according to the PC5 interface configuration message, the Uu interface configuration message, and second pre-configuration information.

In the communication apparatus of a device-to-device system provided in the embodiment of the present application, the relay UE can receive at least one of the PC5 interface configuration message or the Uu interface configuration message, and then performs corresponding configuration according to the PC5 interface configuration message, the Uu interface configuration message and the second pre-configuration information, so that the relay UE supports D2D communication with the remote UE and forwards the communication information to the base station.

Optionally, the PC5 interface configuration message includes: configuration information for transmitting a remote UE SRB via a relay UE PC5 interface and configuration information for transmitting a remote UE Uu DRB via the relay UE PC5 interface.

Optionally, the configuration information for transmitting the remote UE SRB via the relay UE PC5 interface may include: remote UE SRB-related configuration information and PC5 bearer-related configuration information corresponding to the remote UE SRB-related configuration information; and the configuration information for transmitting the remote UE Uu DRB via the relay UE PC5 interface includes: remote UE Uu DRB-related configuration information and PC5 bearer-related configuration information corresponding to the remote UE Uu DRB-related configuration information.

Optionally, the Uu interface configuration message may include: a tunnel DRB configuration message and/or a tunnel SRB configuration message; and/or a relay UE Uu DRB configuration message and/or a relay UE SRB configuration message. The Uu interface configuration message is used for configuring the relay UE to establish, modify or delete at least one of a tunnel SRB or a tunnel DRB between the relay UE and the base station; and the tunnel DRB or the tunnel SRB is used for communication between the relay UE and the base station.

Correspondingly, as shown in FIG. 9, an example not covered by the claimed invention further provides a communication apparatus of a device-to-device system. The apparatus includes base station sending unit 91 and a base station communication unit 92.

The base station sending unit 91 is configured to send at least one of a PC5 interface configuration message or a Uu interface configuration message to a relay UE or send the PC5 interface configuration message to a remote UE. The PC5 interface configuration message is used for configuring a D2D communication function between the relay UE and the remote UE, and the Uu interface configuration message is used for configuring a communication function between the relay UE and a base station.

The base station communication unit 92 is configured to perform communication with the remote UE via the relay UE.

In the communication apparatus of a device-to-device system, the base station can send the PC5 interface configuration message and/or the Uu interface configuration message to the relay UE, or send the PC5 interface configuration message to the remote UE, and then performs communication with the remote UE through the relay UE. In this way, the D2D communication function between the relay UE and the remote UE can be configured through the PC5 interface configuration message and the communication function between the relay UE and the base station can be configured through the Uu interface configuration message, so that the relay UE supports D2D communication with the remote UE, and power consumption of the remote UE is greatly reduced.

Optionally, the PC5 interface configuration message includes: relevant configuration information for transmitting a remote UE SRB via a relay UE PC5 interface and relevant configuration information for transmitting a remote UE Uu DRB via the relay UE PC5 interface.

The Uu interface configuration message includes: a tunnel DRB configuration message and/or a tunnel SRB configuration message; and/or a relay UE Uu DRB configuration message and/or a relay UE SRB configuration message.

The Uu interface configuration message is used for configuring the relay UE to establish, modify or delete at least one of a tunnel SRB or a tunnel DRB between the relay UE and the base station; and the tunnel DRB or the tunnel SRB is used for communication between the relay UE and the base station.

Correspondingly, an embodiment of the present application further provides a data transmission apparatus. The apparatus includes a relay forwarding unit.

The relay forwarding unit is configured to forward at least one of a remote UE Uu DRB or a remote UE SRB based on configuration supporting D2D communication of a remote UE. The configuration includes at least one of: configuration of a tunnel DRB between a relay UE and a base station, configuration of a tunnel SRB between the relay UE and the base station, configuration of a relay UE Uu DRB, configuration of a relay UE SRB, or configuration of a PC5 interface between the relay UE and the remote UE.

The relay forwarding unit in the data transmission apparatus provided in the embodiment of the present application is configured to forward a remote UE Uu DRB and/or a remote UE SRB based on configuration supporting D2D communication of a remote UE, so that the relay UE supports D2D communication with the remote UE, and power consumption of the remote UE is greatly reduced.

Optionally, the relay forwarding unit is configured to: after data is received, determine, according to object indication information carried in the received data, a remote UE corresponding to the data, and send the received data to the remote UE.

Optionally, the relay forwarding unit is configured to:
receive, at a corresponding Uu interface, downlink data from the base station;
determine, according to object indication information carried in received data, a remote UE corresponding to the data, which includes: determining, according to the object indication information carried in the received downlink data, a target UE corresponding to the downlink data; and
map, according to configuration information of the remote UE at the relay UE, the downlink data received from the base station to a corresponding PC5 interface.

Optionally, the relay forwarding unit is configured to:
receive uplink data from the remote UE at a corresponding PC5 interface;
determine, according to object indication information carried in received data, a remote UE corresponding to the data, which includes: determining, according to the object indication information carried in the received uplink data, a source UE corresponding to the uplink data; and map, according to configuration information of the remote UE at the relay UE, the uplink data received from the source UE to a corresponding tunnel DRB or tunnel SRB or relay UE Uu DRB or relay UE SRB.

It is to be noted that as used herein, the term "comprising", "including" or any other variant thereof is intended to encompass a non-exclusive inclusion so that a process, method, article or apparatus that includes a series of elements not only includes the expressly listed elements but also includes other elements that are not expressly listed or are inherent to such a process, method, article or apparatus. In the absence of more restrictions, the elements defined by the statement "including a ..." do not exclude the presence of additional identical elements in the process, method, article or apparatus that includes the elements.

From the description of the embodiments described above, it will be apparent to those skilled in the art that the method in the embodiments described above may be implemented by software plus a necessary general-purpose hardware platform (e.g., a processor), or may of course be implemented by hardware. However, in many cases, the former is a preferred implementation mode. Based on this understanding, the technical solutions provided by the embodiments of the present application substantially, or the part contributing to the related art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, an air-conditioner, a network device or the like) to execute the method according to each embodiment of the present application.

An example not covered by the claimed invention further provides a computer storage medium. The computer storage medium is configured to store computer-executable instructions. After being executed, the computer-executable instructions are capable of implementing one or more of the communication methods of a device-to-device system or the data forwarding methods described above, for example, one or more of the methods shown in FIGS. 1 to 4.

The computer storage medium may be a storage medium in any form, such as a random access memory, a read only memory, a flash memory, a mobile hard disk, an optical disk, a magnetic tape, and the like, or may be a non-transitory storage medium.

### INDUSTRIAL APPLICABILITY

With the technical solutions provided in the embodiments of the present application, a remote UE receives a PC5 interface configuration message and then configure the message content of the message based on the PC5 interface configuration message, or, in examples not ed by the claimed invention, performs corresponding configuration based on triggering of the PC5 interface configuration message and according to the first pre-configuration information. For example, a bearer that is accessed to a communication network via a relay UE is configured. Thus, the access to the communication network based on the relay UE is achieved. On one hand, the coverage range of the communication network is increased, and on the other hand, the remote UE can perform information interaction with the network side without transmitting radio signals of a large radiation range. The power consumption of the remote UE can be reduced, and the standby time of the remote UE can be increased. At the same time, on the other hand, the remote UE may perform signaling and/or data interaction with the network side through the relay UE according to the PC5 interface configuration message and/or the first pre-configuration message, Thus, the communication operator can control the communication of the remote UE by using the relay UE, avoiding he incompatibility problem caused by the communication of different UEs based on the fixed settings within the device vendors and improving the universality of the communication. Therefore, the technical solutions in the present application have beneficial technical effects. At the same time, features that are simple to implement are also provided so that the technical solutions in the present application can be widely practiced in the industry.

## Claims

1. A communication method of a device-to-device, D2D, system, comprising:
receiving (S11), by a remote user equipment, UE, a PC5 interface configuration message, wherein the PC5 interface configuration message is used for configuring the remote LTE to support a D2D communication function; and
performing (S12), by the remote UE, a corresponding configuration according to the PC5 interface configuration message;
wherein the receiving, by the remote UE, the PC5 interface configuration message comprises:
receiving, by the remote UE, the PC5 interface configuration message directly from a base station, or receiving the PC5 interface configuration message from a base station via a relay UE; wherein the PC5 interface configuration message comprises configuration information for transmitting a remote UE signaling radio bearer, SRB, via a PC5 interface and configuration information for transmitting a remote UE Uu data radio bearer, DRB, via the PC5 interface;
wherein the configuration information for transmitting the remote UE SRB via the PC5 interface comprises remote UE SRB-related configuration information and PC5 bearer-related configuration information corresponding to the remote UE SRB-related configuration information; and
the configuration information for transmitting the remote UE Uu DRB via the PC5 interface comprises remote UE Uu DRB-related configuration information and PC5 bearer-related configuration information corresponding to the remote UE Uu DRB-related configuration information; and
wherein the remote UE SRB-related configuration information comprises at least one of: an identifier, ID, of the remote UE SRB, an ID of a logical channel corresponding to the remote UE SRB, radio link control protocol acknowledged mode, RLC AM, configuration information corresponding to the remote UE SRB, radio link control protocol unacknowledged mode, RLC UM, configuration information corresponding to the remote UE SRB, a priority guaranteed bit rate, PBR, or a bucket size duration, BSD;
the remote UE Uu DRB-related configuration information comprises at least one of: an ID of the remote UE Uu DRB, an ID of a logical channel corresponding to the remote UE Uu DRB, RLC AM configuration information corresponding to the remote UE Uu DRB, RLC UM configuration information corresponding to the remote UE Uu DRB, a PBR, and a BSD; and
the PC5 bearer-related configuration information comprises at least one of: an ID of a PC5 bearer, an ID of a PC5 logical channel, RLC AM configuration information corresponding to the PC5 bearer, RLC UM configuration information corresponding to the PC5 bearer, a PBR or a BSD.

2. The method of claim 1, wherein after performing, by the remote UE, the corresponding configuration according to the PC5 interface configuration message, the method further comprises: performing, by the remote UE and based on the configuration, communication with a base station via a relay UE.

3. A communication method of a device-to-device, D2D, system, comprising:
receiving (S21), by a relay user equipment, UE, a PC5 interface configuration message and a Uu interface configuration message from a base station, wherein the PC5 interface configuration message is used for configuring a D2D communication function between the relay UE and a remote UE, and the Uu interface configuration message is used for configuring a communication function between the relay UE and the base station; and
performing (S22), by the relay UE, a corresponding configuration according to the PC5 interface configuration message, the Uu interface configuration message, and second pre-configuration information, wherein the second pre-configuration information is configured in the relay UE, and is used for performing signaling radio bearer, SRB, configuration; wherein the PC5 interface configuration message comprises configuration information for transmitting a remote UE SRB via a relay UE PC5 interface and configuration information for transmitting a remote UE Uu data radio bearer, DRB, via the relay UE PC5 interface;
wherein the configuration information for transmitting the remote UE SRB via the relay UE PC5 interface comprises remote UE SRB-related configuration information and PC5 bearer-related configuration information corresponding to the remote UE SRB-related configuration information; and
the configuration information for transmitting the remote UE Uu DRB via the relay UE PC5 interface comprises: remote UE Uu DRB-related configuration information and PC5 bearer-related configuration information corresponding to the remote UE Uu DRB-related configuration information; and
wherein the remote UE SRB-related configuration information comprises at least one of: an identifier, ID, of the remote UE SRB, an ID of a logical channel corresponding to the remote UE SRB, radio link control protocol acknowledged mode, RLC AM, configuration information corresponding to the remote UE SRB, radio link control protocol unacknowledged mode, RLC UM, configuration information corresponding to the remote UE SRB, a priority guaranteed bit rate, PBR, or a bucket size duration, BSD;
the remote UE Uu DRB-related configuration information comprises at least one of: an ID of the remote UE Uu DRB, an ID of a logical channel corresponding to the remote UE Uu DRB, RLC AM configuration information corresponding to the remote LTE Uu DRB, RLC UM configuration information corresponding to the remote UE Uu DRB, a PBR, and a BSD; and
the PC5 bearer-related configuration information comprises at least one of: an ID of a PC5 bearer, an ID of a PC5 logical channel, RLC AM configuration information corresponding to the PC5 bearer, RLC UM configuration information corresponding to the PC5 bearer, a PBR or a BSD.

4. The method of claim 3, wherein the Uu interface configuration message comprises: a tunnel DRB configuration message and/or a tunnel SRB configuration message; and/or a relay UE Uu DRB configuration message and/or a relay UE SRB configuration message;
wherein the Uu interface configuration message is used for configuring the relay UE to establish, modify or delete at least one of a tunnel SRB or a tunnel DRB between the relay UE and the base station; and the tunnel DRB or the tunnel SRB is used for communication between the relay UE and the base station.

5. The method of claim 4, wherein the tunnel DRB configuration message comprises at least one of: tunnel DRB-related configuration information, remote UE Uu DRB-related configuration information, relay UE Uu DRB-related configuration information, and remote UE SRB-related configuration information.

6. The method of claim 5, wherein the tunnel DRB-related configuration information comprises at least one of: identifier, ID, information of the tunnel DRB, ID information of a logical channel corresponding to the tunnel DRB, quality of service class identifier, QCI, information corresponding to the tunnel DRB, radio link control protocol acknowledged mode, RLC AM, configuration information corresponding to the tunnel DRB, radio link control protocol unacknowledged mode, RLC UM, configuration information, a priority guaranteed bit rate, PBR, a bucket size duration, BSD, or a logical channel group ID;
the remote UE SRB-related configuration information comprises at least one of: ID information of the remote UE, ID information of the remote UE SRB, ID information of a logical channel corresponding to the remote UE SRB, an ID of a logical channel group corresponding to the remote UE SRB, RLC AM configuration information corresponding to the remote UE SRB, RLC UM configuration information corresponding to remote UE SRB, a PBR, or a BSD;
the remote UE Uu DRB-related configuration information comprises at least one of: the ID information of the remote UE, ID information of the remote UE Uu DRB, QCI information corresponding to the remote UE Uu DRB, ID information of a logical channel corresponding to the remote UE Uu DRB, an ID of a logical channel group corresponding to the remote UE Uu DRB, RLC AM configuration information corresponding to the remote UE Uu DRB, RLC UM configuration information corresponding to remote UE Uu DRB, a PBR, or a BSD; and
the relay UE Uu DRB-related configuration information comprises at least one of: ID information of the relay UE Uu DRB, QCI information corresponding to the relay UE Uu DRB, ID information of a logical channel corresponding to the relay LTE Uu DRB, an ID of a logical channel group corresponding to the relay UE Uu DRB, RLC AM configuration information corresponding to the relay UE Uu DRB, RLC UM configuration information corresponding to relay UE Uu DRB, a PBR, or a BSD.

7. The method of claim 4, wherein the tunnel SRB configuration message comprises at least one of: tunnel SRB-related configuration information, remote UE SRB-related configuration information, and relay UE SRB-related configuration information.

8. The method of claim 7, wherein the tunnel SRB-related configuration information comprises at least one of: ID information of the tunnel SRB, ID information of a logical channel corresponding to the tunnel SRB, QCI information corresponding to the tunnel SRB, RLC AM configuration information corresponding to the tunnel SRB, RLC UM configuration information, a PBR, a BSD, and a logical channel group ID.

## Patentansprüche

1. Kommunikationsverfahren eines Vorrichtung-zu-Vorrichtung, D2D-, Systems umfassend:
Empfangen (S11) einer PC5-Schnittstellenkonfigurationsnachricht durch ein entferntes Benutzergerät, UE, wobei die PC5-Schnittstellenkonfigurationsnachricht zum Konfigurieren des entfernten UE verwendet wird, um eine D2D-Kommunikationsfunktion zu unterstützen; und
Durchführen (SI2) einer entsprechenden Konfiguration durch das entfernte UE gemäß der PC5-Schnittstellenkonfigurationsnachricht;
wobei das Empfangen der PC5-Schnittstellenkonfigurationsnachricht durch das entfernte UE Folgendes umfasst: Empfangen der PC5-Schnittstellenkonfigurationsnachricht direkt von einer Basisstation durch das entfernte UE oder Empfangen der PC5-Schnittstellenkonfigurationsnachricht von einer Basisstation über ein Relais-UE;
wobei die PC5-Schnittstellenkonfigurationsnachricht Konfigurationsinformationen zum Übertragen eines entfernten UE-Signalisierungsfunkträgers, SRB, über eine PC5-Schnittstelle und Konfigurationsinformationen zum Übertragen eines entfernten UE-Uu-Datenfunkträgers, DRB, über die PC5-Schnittstelle umfasst;
wobei die Konfigurationsinformationen zum Übertragen des entfernten UE SRB über die PC5-Schnittstelle entfernte UE SRB-bezogene Konfigurationsinformationen und PC5-Träger-bezogene Konfigurationsinformationen umfassen, die den entfernten UE SRB-bezogenen Konfigurationsinformationen entsprechen; und
die Konfigurationsinformationen zum Übertragen des entfernten UE Uu DRB über die PC5-Schnittstelle entfernte UE Uu DRB-bezogene Konfigurationsinformationen und PC5-Träger-bezogene Konfigurationsinformationen umfassen, die den entfernten UE Uu DRB-bezogenen Konfigurationsinformationen entsprechen; und
wobei die entfernte UE SRB-bezogene Konfigurationsinformation mindestens eines von Folgendem umfasst: einen Identifikator, ID, des entfernten UE SRB, eine ID eines logischen Kanals, der dem entfernten UE SRB entspricht, Funkverbindungssteuerungsprotokoll quittierter Modus, RLC AM, Konfigurationsinformationen, die dem entfernten UE SRB entsprechen, Funkverbindungssteuerungsprotokoll unquittierter Modus, RLC AM, Konfigurationsinformationen, die dem entfernten UE SRB entsprechen, eine prioritätsgarantierte Bitrate, PBR, oder eine Bucket-Größendauer, BSD;
die entfernte UE Uu DRB-bezogenen Konfigurationsinformationen mindestens eines von Folgendem umfassen: eine ID des entfernten UE Uu DRB, eine ID eines logischen Kanals, der des entfernten UE Uu DRB entspricht, RLC AM-Konfigurationsinformationen, die des entfernten UE Uu DRB entsprechen, RLC AM-Konfigurationsinformationen, die des entfernten UE Uu DRB entsprechen, ein PBR und ein BSD; und
die PC5-Träger-bezogenen Konfigurationsinformationen mindestens eines von Folgendem umfassen: eine ID eines PC5-Trägers, eine ID eines logischen PC5-Kanals, RLC AM-Konfigurationsinformationen, die dem PC5-Träger entsprechen, RLC AM-Konfigurationsinformationen, die dem PC5-Träger entsprechen, ein PBR oder ein BSD.

2. Verfahren nach Anspruch 1, wobei das Verfahren nach dem Durchführen der entsprechenden Konfiguration gemäß der PC5-Schnittstellenkonfigurationsnachricht durch das entfernte UE ferner Folgendes umfasst:
Durchführen von Kommunikation mit einer Basisstation über ein Relais-UE durch das entfernte UE und auf Grundlage der Konfiguration.

3. Kommunikationsverfahren eines Vorrichtung-zu-Vorrichtung, D2D-, Systems umfassend:
Empfangen (S21) einer PC5-Schnittstellenkonfigurationsnachricht und einer Uu-Schnittstellenkonfigurationsnachricht von einer Basisstation durch ein Relaisbenutzergerät, UE, wobei die PC5-Schnittstellenkonfigurationsnachricht zum Konfigurieren einer D2D-Kommunikationsfunktion zwischen dem Relais-UE und einem entfernten UE verwendet wird und die Uu-Schnittstellenkonfigurationsnachricht zum Konfigurieren einer Kommunikationsfunktion zwischen dem Relais-UE und der Basisstation verwendet wird; und
Durchführen (S22) einer entsprechenden Konfiguration durch das Relais-UE gemäß der PC5-Schnittstellenkonfigurationsnachricht, der Uu-Schnittstellenkonfigurationsnachricht und zweiten Vorkonfigurationsinformationen, wobei die zweiten Vorkonfigurationsinformationen in dem Relais-UE konfiguriert sind und zum Durchführen einer Signalisierungsfunkträger-, SRB-, Konfiguration verwendet werden;
wobei die PC5-Schnittstellenkonfigurationsnachricht Konfigurationsinformationen zum Übertragen eines entfernten UE SRB über eine Relais-UE-PC5-Schnittstelle und Konfigurationsinformationen zum Übertragen eines entfernten UE-Uu-Datenfunkträgers, DRB, über die Relais-UE-PC5-Schnittstelle umfasst;
wobei die Konfigurationsinformationen zum Übertragen des entfernten UE SRB über die Relais-UE-PC5-Schnittstelle entfernte UE SRB-bezogene Konfigurationsinformationen und PC5-Träger-bezogene Konfigurationsinformationen umfassen, die den entfernten UE SRB-bezogenen Konfigurationsinformationen entsprechen; und
die Konfigurationsinformationen zum Übertragen des entfernten UE Uu DRB über die Relais-UE-PC5-Schnittstelle umfassen: entfernte Uu DRB-bezogene Konfigurationsinformationen und PC5-Träger-bezogene Konfigurationsinformationen, die den entfernten UE Uu DRB-bezogenen Konfigurationsinformationen entsprechen; und
wobei die entfernte UE SRB-bezogene Konfigurationsinformation mindestens eines von Folgendem umfasst: einen Identifikator, ID, des entfernten UE SRB, eine ID eines logischen Kanals, der dem entfernten UE SRB entspricht, Funkverbindungssteuerungsprotokoll quittierter Modus, RLC AM, Konfigurationsinformationen, die dem entfernten UE SRB entsprechen, Funkverbindungssteuerungsprotokoll unquittierter Modus, RLC AM, Konfigurationsinformationen, die dem entfernten UE SRB entsprechen, eine prioritätsgarantierte Bitrate, PBR, oder eine Bucket-Größendauer, BSD;
die entfernte UE Uu DRB-bezogenen Konfigurationsinformationen mindestens eines von Folgendem umfassen: eine ID des entfernten UE Uu DRB, eine ID eines logischen Kanals, der des entfernten UE Uu DRB entspricht, RLC AM-Konfigurationsinformationen, die des entfernten UE Uu DRB entsprechen, RLC AM-Konfigurationsinformationen, die des entfernten UE Uu DRB entsprechen, ein PBR und ein BSD; und
die PC5-Träger-bezogenen Konfigurationsinformationen mindestens eines von Folgendem umfassen: eine ID eines PC5-Trägers, eine ID eines logischen PC5-Kanals, RLC AM-Konfigurationsinformationen, die dem PC5-Träger entsprechen, RLC AM-Konfigurationsinformationen, die dem PC5-Träger entsprechen, ein PBR oder ein BSD.

4. Verfahren nach Anspruch 3, wobei die Uu-Schnittstellenkonfigurationsnachricht umfasst: eine Tunnel-DRB-Konfigurationsnachricht und/oder eine Tunnel-SRB-Konfigurationsnachricht; und/oder eine Relais-UE-Uu-DRB-Konfigurationsnachricht und/oder eine Relais-UE-SRB-Konfigurationsnachricht; wobei die Uu-Schnittstellenkonfigurationsnachricht zum Konfigurieren des Relais-UE verwendet wird, um mindestens einen Tunnel SRB und/oder einen Tunnel DRB zwischen dem Relais-UE und der Basisstation einzurichten, zu modifizieren oder zu löschen; und der Tunnel DRB oder der Tunnel SRB wird zur Kommunikation zwischen dem Relais-UE und der Basisstation verwendet.

5. Verfahren nach Anspruch 4, wobei die Tunnel-DRB-Konfigurationsnachricht mindestens eines von Folgendem umfassen umfasst: Tunnel-DRB-bezogene Konfigurationsinformationen, entfernte UE Uu DRB-bezogene Konfigurationsinformationen, Relais-UE Uu DRB-bezogene Konfigurationsinformationen und entfernte UE SRB-bezogene Konfigurationsinformationen.

6. Verfahren nach Anspruch 5, wobei die Tunnel-DRB-bezogenen Konfigurationsinformationen mindestens eines von Folgendem umfassen:
Identifikator, ID, Informationen des Tunnel-DRB, ID-Informationen eines logischen Kanals, der dem Tunnel-DRB entspricht, Dienstgüteklassenidentifikator, QCI, Informationen, die dem Tunnel-DRB entsprechen, Funkverbindungssteuerungsprotokoll quittierter Modus, RLC AM, Konfigurationsinformationen, die dem Tunnel-DRB entsprechen, Funkverbindungssteuerungsprotokoll unquittierter Modus, RLC AM, Konfigurationsinformationen, eine prioritätsgarantierte Bitrate, PBR, eine Bucket-Größendauer, BSD, oder eine logische Kanalgruppen-ID;
die entfernte UE SRB-bezogenen Konfigurationsinformationen umfassen mindestens eines von Folgendem: ID-Informationen des entfernten UE, ID-Informationen des entfernten UE SRB, ID-Informationen eines logischen Kanals, der dem entfernten UE SRB entspricht, eine ID einer logischen Kanalgruppe, die dem entfernten UE SRB entspricht, RLC AM-Konfigurationsinformationen, die dem entfernten UE SRB entsprechen, RLC AM-Konfigurationsinformationen, die dem entfernten UE SRB, einem PBR oder einem BSD entsprechen;
die entfernte UE Uu DRB-bezogenen Konfigurationsinformationen mindestens eines von Folgendem umfassen: die ID-Informationen des entfernten UE, ID-Informationen des entfernten UE Uu DRB, QCI-Informationen, die des entfernten UE Uu DRB entsprechen, ID-Informationen eines logischen Kanals, der des entfernten UE Uu DRB entspricht, eine ID einer logischen Kanalgruppe, die des entfernten UE Uu DRB entspricht, RLC AM-Konfigurationsinformationen, die des entfernten UE Uu DRB entsprechen, RLC AM-Konfigurationsinformationen, die des entfernten UE Uu DRB entsprechen, ein PBR oder ein BSD; und
die Relais UE Uu DRB-bezogenen Konfigurationsinformationen mindestens eines von Folgendem umfassen: ID-Informationen des Relais UE Uu DRB, QCI-Informationen, die dem Relais UE Uu DRB entsprechen, ID-Informationen eines logischen Kanals, der dem Relais UE Uu DRB entspricht, eine ID einer logischen Kanalgruppe, die dem Relais UE Uu DRB entspricht, RLC AM-Konfigurationsinformationen, die dem Relais UE Uu DRB entsprechen, RLC AM-Konfigurationsinformationen, die dem Relais UE Uu DRB entsprechen, ein PBR oder ein BSD.

7. Verfahren nach Anspruch 4, wobei die Tunnel-SRB-Konfigurationsnachricht mindestens eines von Folgendem umfasst: Tunnel-SRB-bezogene Konfigurationsinformationen, entfernte UE-SRB-bezogene Konfigurationsinformationen und Relais-UE-SRB-bezogene Konfigurationsinformationen.

8. Verfahren nach Anspruch 7, wobei die Tunnel-SRB-bezogenen Konfigurationsinformationen mindestens eines von Folgendem umfassen: ID-Informationen des Tunnels SRB, ID-Informationen eines logischen Kanals entsprechend dem Tunnel SRB, QCI-Informationen entsprechend dem Tunnel SRB, RLC AM-Konfigurationsinformationen entsprechend dem Tunnel SRB, RLC AM-Konfigurationsinformationen, ein PBR, ein BSD und eine logische Kanalgruppen-ID.

## Revendications

1. Procédé de communication pour système de dispositif à dispositif, D2D, comprenant:
la réception (S11), par un équipement utilisateur distant UE, d'un message de configuration de l'interface PC5, le message de configuration de l'interface PC5 étant utilisé pour configurer l'UE distant afin de supporter une fonction de communication D2D; et
l'exécution (S12), par l'UE distant, d'une configuration correspondante conformément au message de configuration de l'interface PC5;
dans lequel la réception, par l'UE distant, du message de configuration de l'interface PC5 comprend: la réception, par l'UE distant, du message de configuration de l'interface PC5 directement à partir d'une station de base, ou la réception du message de configuration de l'interface PC5 à partir d'une station de base par l'intermédiaire d'un UE relais;
dans lequel le message de configuration de l'interface PC5 comprend des informations de configuration pour la transmission d'un support radio de signalisation UE SRB distant, par l'intermédiaire d'une interface PC5 et des informations de configuration pour la transmission d'un support radio de données UE Uu DRB distant, par l'intermédiaire de l'interface PC5;
dans lequel les informations de configuration pour la transmission de l'UE SRB distant par l'intermédiaire de l'interface PC5 comprennent des informations de configuration relatives à l'UE SRB distant et des informations de configuration relatives au support PC5 correspondant aux informations de configuration relatives à l'UE SRB distant; et
les informations de configuration pour la transmission de l'UE Uu DRB distant par l'intermédiaire de l'interface PC5 comprennent des informations de configuration relatives à l'UE Uu DRB distant et des informations de configuration relatives au support PC5 correspondant aux informations de configuration relatives à l'UE Uu DRB distant; et
dans lequel les informations de configuration relatives à l'UE SRB distant comprennent au moins l'un des éléments suivants: un identifiant ID, de l'UE SRB distant, un identifiant d'un canal logique correspondant à l'UE SRB distant, le mode acquitté de protocole de contrôle de liaison radio RLC AM, les informations de configuration correspondant à l'UE SRB distant, le mode non acquitté de protocole de contrôle de liaison radio RLC AM, les informations de configuration correspondant à l'UE SRB distant, un débit binaire garanti prioritaire PBR, ou une durée de taille de paquet BSD;
les informations de configuration relatives à l'UE Uu DRB distant comprennent au moins l'un des éléments suivants: un identifiant de l'UE Uu DRB distant, un identifiant d'un canal logique correspondant à l'UE Uu DRB distant, des informations de configuration RLC AM correspondant à l'UE Uu DRB distant, des informations de configuration RLC AM correspondant à l'UE Uu DRB distant, un PBR et un BSD; et
les informations de configuration relatives au support PC5 comprennent au moins l'un des éléments suivants: un identifiant d'un support PC5, un identifiant d'un canal logique PC5, des informations de configuration RLC AM correspondant au support PC5, des informations de configuration RLC AM correspondant au support PC5, un PBR ou un BSD.

2. Procédé selon la revendication 1, dans lequel, après avoir effectué, par l'UE distant, la configuration correspondante conformément au message de configuration de l'interface PC5, le procédé comprend en outre:
l'exécution, par l'UE distant et sur la base de la configuration, de la communication avec une station de base par l'intermédiaire d'un UE relais.

3. Procédé de communication pour système de dispositif à dispositif, D2D, comprenant:
la réception (S21), par un équipement utilisateur relais UE, d'un message de configuration d'interface PC5 et d'un message de configuration d'interface Uu en provenance d'une station de base, le message de configuration d'interface PC5 étant utilisé pour configurer une fonction de communication D2D entre l'UE relais et un UE distant, et le message de configuration d'interface Uu étant utilisé pour configurer une fonction de communication entre l'UE relais et la station de base; et
l'exécution (S22), par l'UE relais, d'une configuration correspondante en fonction du message de configuration de l'interface PC5, du message de configuration de l'interface Uu et des secondes informations de préconfiguration, les secondes informations de préconfiguration étant configurées dans l'UE relais et utilisées pour effectuer la configuration du support radio de signalisation SRB;
dans lequel le message de configuration de l'interface PC5 comprend des informations de configuration pour la transmission d'un SRB UE distant par l'intermédiaire d'une interface PC5 UE relais et des informations de configuration pour la transmission d'un support radio de données UE Uu DRB distant, par l'intermédiaire de l'interface PC5 de l'UE relais;
dans lequel les informations de configuration pour la transmission de l'UE SRB distant par l'intermédiaire de l'interface PC5 de l'UE relais comprennent des informations de configuration relatives à l'UE SRB distant et des informations de configuration relatives au support PC5 correspondant aux informations de configuration relatives à l'UE SRB distant; et
les informations de configuration pour la transmission de l'UE Uu DRB distant par l'intermédiaire de l'interface PC5 de l'UE relais comprennent: des informations de configuration relatives à l'UE Uu DRB distant et des informations de configuration relatives au support PC5 correspondant aux informations de configuration relatives à l'UE Uu DRB distant; et
dans lequel les informations de configuration relatives à l'UE SRB distant comprennent au moins l'un des éléments suivants: un identifiant ID, de l'UE SRB distant, un identifiant d'un canal logique correspondant à l'UE SRB distant, le mode acquitté de protocole de contrôle de liaison radio RLC AM, les informations de configuration correspondant à l'UE SRB distant, le mode non acquitté de protocole de contrôle de liaison radio RLC AM, les informations de configuration correspondant à l'UE SRB distant, un débit binaire garanti prioritaire PBR, ou une durée de taille de paquet BSD;
les informations de configuration relatives à l'UE Uu DRB distant comprennent au moins l'un des éléments suivants : un identifiant de l'UE Uu DRB distant, un identifiant d'un canal logique correspondant à l'UE Uu DRB distant, des informations de configuration RLC AM correspondant à l'UE Uu DRB distant, des informations de configuration RLC AM correspondant à l'UE Uu DRB distant, un PBR et un BSD; et
les informations de configuration relatives au support PC5 comprennent au moins l'un des éléments suivants : un identifiant d'un support PC5, un identifiant d'un canal logique PC5, des informations de configuration RLC AM correspondant au support PC5, des informations de configuration RLC AM correspondant au support PC5, un PBR ou un BSD.

4. Procédé selon la revendication 3, dans lequel le message de configuration de l'interface Uu comprend: un message de configuration DRB de tunnel et/ou un message de configuration SRB de tunnel; et/ou un message de configuration de l'UE Uu DRB relais et/ou un message de configuration de l'UE SRB relais;
dans lequel le message de configuration de l'interface Uu est utilisé pour configurer l'UE relais afin d'établir, de modifier ou de supprimer au moins un tunnel SRB ou un tunnel DRB entre l'UE relais et la station de base; et le tunnel DRB ou le tunnel SRB est utilisé pour la communication entre l'UE relais et la station de base.

5. Procédé selon la revendication 4, dans lequel le message de configuration DRB de tunnel comprend au moins l'une des informations suivantes: informations de configuration relatives au tunnel DRB, informations de configuration relatives à l'UE Uu DRB distant, informations de configuration relatives à l'UE Uu DRB relais et informations de configuration relatives à l'UE SRB distant.

6. Procédé selon la revendication 5, dans lequel les informations de configuration relatives au DRB du tunnel comprennent au moins l'un des éléments suivants:
informations d'identification ID du tunnel DRB, informations d'identification d'un canal logique correspondant au tunnel DRB, informations d'identification de classe de qualité de service QCI correspondant au tunnel DRB, informations de configuration de mode acquitté de protocole de contrôle de liaison radio RLC AM correspondant au tunnel DRB, informations de configuration de mode non acquitté de protocole de contrôle de liaison radio RLC AM, un débit binaire garanti prioritaire PBR, une durée de taille de paquet BSD, ou un identifiant de groupe de canaux logiques;
les informations de configuration relatives à l'UE SRB distant comprennent au moins l'un des éléments suivants : des informations d'identification de l'UE distant, des informations d'identification de l'UE SRB distant, des informations d'identification d'un canal logique correspondant à l'UE SRB distant, une identification d'un groupe de canaux logiques correspondant à l'UE SRB distant, des informations de configuration RLC AM correspondant à l'UE SRB distant, des informations de configuration RLC AM correspondant à l'UE SRB distant, un PBR ou un BSD;
les informations de configuration relatives à l'UE Uu DRB distant comprennent au moins l'une des informations suivantes : les informations d'identification de l'UE distant, les informations d'identification de l'UE Uu DRB distant, les informations QCI correspondant à l'UE Uu DRB distant, les informations d'identification d'un canal logique correspondant à l'UE Uu DRB distant, une identification d'un groupe de canaux logiques correspondant à l'UE Uu DRB distant, les informations de configuration RLC AM correspondant à l'UE Uu DRB distant, les informations de configuration RLC AM correspondant à l'UE Uu DRB distant, un PBR, ou un BSD; et
les informations de configuration relatives à l'UE Uu DRB relais comprennent au moins l'une des informations suivantes : informations d'identification de l'UE Uu DRB relais, informations QCI correspondant à l'UE Uu DRB relais, informations d'identification d'un canal logique correspondant à l'UE Uu DRB relais, identification d'un groupe de canaux logiques correspondant à l'UE Uu DRB relais, informations de configuration RLC AM correspondant à l'UE Uu DRB relais, informations de configuration RLC AM correspondant à l'UE Uu DRB relais, un PBR ou un BSD.

7. Procédé selon la revendication 4, dans lequel le message de configuration du tunnel SRB comprend au moins l'une des informations suivantes: informations de configuration relatives au tunnel SRB, informations de configuration relatives à l'UE SRB distant et informations de configuration relatives à l'UE SRB relais.

8. Procédé selon la revendication 7, dans lequel les informations de configuration relatives au tunnel SRB comprennent au moins l'une des informations suivantes:
informations d'identification du tunnel SRB, informations d'identification d'un canal logique correspondant au tunnel SRB, informations QCI correspondant au tunnel SRB, informations de configuration RLC AM correspondant au tunnel SRB, informations de configuration RLC AM, un PBR, un BSD et un identifiant d'un groupe de canaux logiques.
